# EUROPEAN PATENT APPLICATION

(11) **EP 0 687 970 A1**
(43) Date of publication of application: **20.12.1995**
(21) Application number: 95302982.4
(22) Date of filing: 02.05.1995
(51) Int. Cl.: G06F 1/18

(54) **Customizable computer housing with removable skirts**

(30) Priority: 10.06.1994 US 258632
(71) Applicant: PACKARD BELL ELECTRONICS INC., Westlake Village, California 91362 (US)
(72) Inventor: Esslinger, Hartmut H., Los Gatos, California 95030 (US)
(74) Representative: Rickard, Timothy Mark Adrian

(57) **Abstract**

A computer housing with a removable skirt or panel is described. The appearance of the computer housing may be easily customized by replacing the skirt or panel with a skirt or panel having a different color or design. Preferably, the skirt or panel has integral connecting means, such as slide-in clips, snap fits, and/or hooks or the like, and may be placed and removed with pressure applied manually by a person without special tools or skills. Additionally, the skirt or panel is preferably mounted exterior to the housing such that the skirt or panel may be replaced without exposing the internal components of the computer to inadvertent contact or contaminants.

## Description

### BACKGROUND OF THE INVENTION

### Field of the Invention

The field of the present invention relates generally to housings for personal computers, and more particularly to removable skirts or panels for personal computer housings.

### Background

The personal computer industry has become increasingly competitive, and manufacturers and sellers of personal computers, particularly IBM compatible computers, have focused strongly upon providing computers at the lowest possible price. In many respects, this has turned the desktop personal computer into a commodity product. It has also generated greatly increased consumer demand for computers for personal and household use.

Particularly prevalent among such customers is a desire to improve or customize the appearance of the personal computer to fit personal tastes or to match color or design schemes with the surrounding furniture or environment. In fact, some owners of Apple Macintosh computers have gone so far as to have their computers custom painted to fit their personal taste. Of course, this service is expensive and is impractical for the typical computer owner.

One popular product for customizing the look of a personal computer monitor is, in essence, an inexpensive cardboard picture frame that fits around the monitor. The color or design of the frame can be altered to fit personal taste. Importantly, these frames are inexpensive, and do not require special tools for placement and removal.

What is needed, however, is an inexpensive and simple apparatus for customizing a personal computer housing. Computer housings are used to house and protect the components of a computer, typically including a CPU, power supply, I/O cards or interfaces, storage devices, and a fan or other cooling system. Conventional housings come in a variety of styles, including rectangular desktop styles and upright tower styles. There are also more innovative designs which incorporate the monitor into the housing. For example, the Apple Macintosh computer uses such a housing.

Conventional computer housings typically provide two levels of access to internal components. Sensitive components that the user does not need to access for normal use are usually enclosed within the housing for protection from inadvertent contact and from contaminants such as dust. Usually, the front and back of the housing are attached to a metal base structure, and a U-shaped cover comprising a top and sides is screwed in place to complete the housing. To access sensitive components, a screwdriver may be necessary to unscrew the cover which must then be removed to expose the internally housed components. Interface components, on the other hand, may be accessed through ports or slots in the housing wall. These components include power buttons, disk drive slots, plugs for keyboards and power cords, and other I/O connectors. The housing may also have a vent for a fan or other cooling system. However, these components must be designed and arranged to minimize or prevent contaminants from entering the housing.

In some instances, empty drive ports are covered with a removable plastic cap. The caps keep dust and other contaminants out of empty ports, and are typically designed to match the color and style of the housing. They may be removed manually or with the aid of a screwdriver or other tool. However, difficulty is often encountered in placing and removing these caps, since they may slide back into the port or get lodged at an angle. They are not designed for repeated placement and removal by the end user, but rather act as a permanent cover until a new disk drive, CD ROM drive, tape drive, or the like is installed.

What is needed is an apparatus for customizing a computer housing that can be placed and removed without tools or special skills. In addition, the apparatus preferably should have integral connecting means rather than screws or the like. Finally, such an apparatus preferably should be removable without exposing the internal components or ports of the computer to contaminants.

### SUMMARY OF THE INVENTION

One aspect of the present invention provides a computer housing with a removable skirt or panel. It is an advantage of this and other aspects of the present invention that the appearance and design of the computer housing can be easily and inexpensively customized.

Another aspect of the present invention provides a computer housing with a removable skirt or panel with connecting means integral to said skirt or panel. It is an advantage of this and other aspects of the present invention that the connecting means are not easily lost which further simplifies the system.

Another aspect of the present invention provides a removable skirt or panel mounted exterior to said housing such that removal of said skirt or panel does not expose the interior of said computer to contaminants.

Yet another aspect of the present invention provides a removable skirt or panel mounted to a computer housing with slide-in clips, and/or snap connectors. It is an advantage of this and other aspects of the present invention that the skirt or panel may be removed with pressure applied manually by a person without special tools or skills.

### BRIEF DESCRIPTION OF THE DRAWINGS

The invention will be understood more fully from the detailed description given below and from the accompanying drawings of the preferred embodiments, wherein:
Figure 1 is a perspective view of a first embodiment of the present invention;
Figure 2 is a perspective view of a front skirt and housing according to the first embodiment of the present invention;
Figure 3 is side cross section of a front skirt and housing according to the first embodiment of the present invention;
Figure 4 is a side view of a side panel and a front panel according to the first embodiment;
Figure 5 is a perspective view of a first side panel according to the first embodiment of the present invention;
Figure 6 is a perspective view of a second side panel according to the first embodiment of the present invention.

### DESCRIPTION OF THE PREFERRED EMBODIMENT(S)

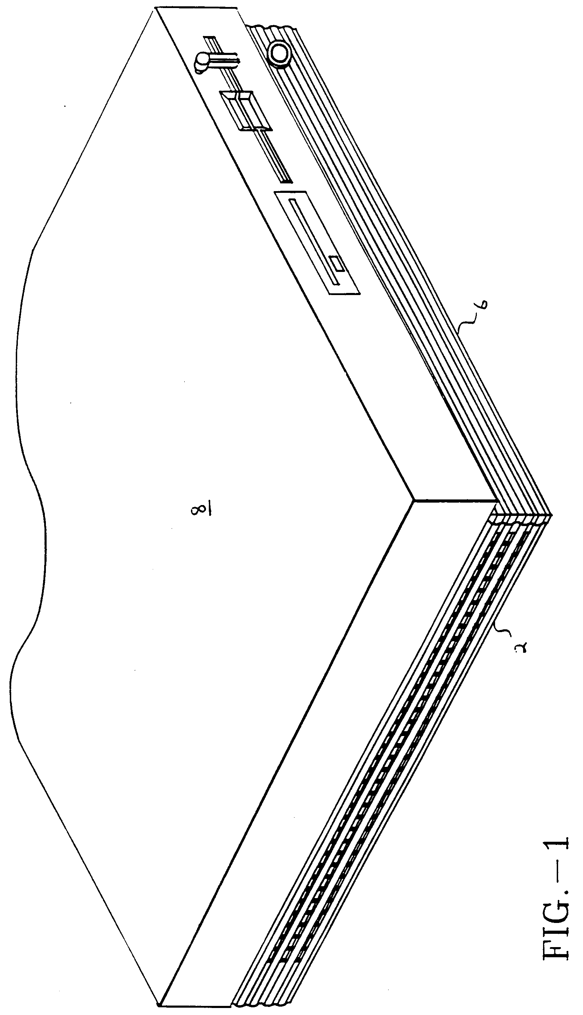

In a first embodiment, a computer housing is provided which is specially adapted to receive removable plastic skirts or panels. While reference is made to removable skirts, it is understood that this term encompasses all types of panels coupled to the computer housing and is not limited to panels attached to the base of the housing. Figure 1 is a perspective view of a first embodiment according to the present invention showing removable skirts 2 and 6 mounted to the computer housing 8. The computer housing 8 comprises a rectangular metal structure covered by an outer plastic skin. The skirts in the first embodiment comprise a lightweight and inexpensive Acrylonitrile-Butadiene-Styrene (ABS) plastic material which has the advantages of being inexpensive, lightweight, and recyclable. The skirts span the base of the front and both sides of the rectangular computer housing. While there are in fact three separate skirts -- a left and right side skirt and a front skirt -- they are arranged such that they form a continuous border around three sides of the housing. In this configuration, changing the color or design of the skirts can drastically change the appearance of the computer. Since the skirts are made from an inexpensive and lightweight material, a retailer or end user can stock several styles of skirts and readily modify the housing to suit personal taste. In addition, the computer housing and skirts in the first embodiment are designed for simple placement and removal by an ordinary person without special tools or skills, and can be replaced without exposing internal components to contaminants.

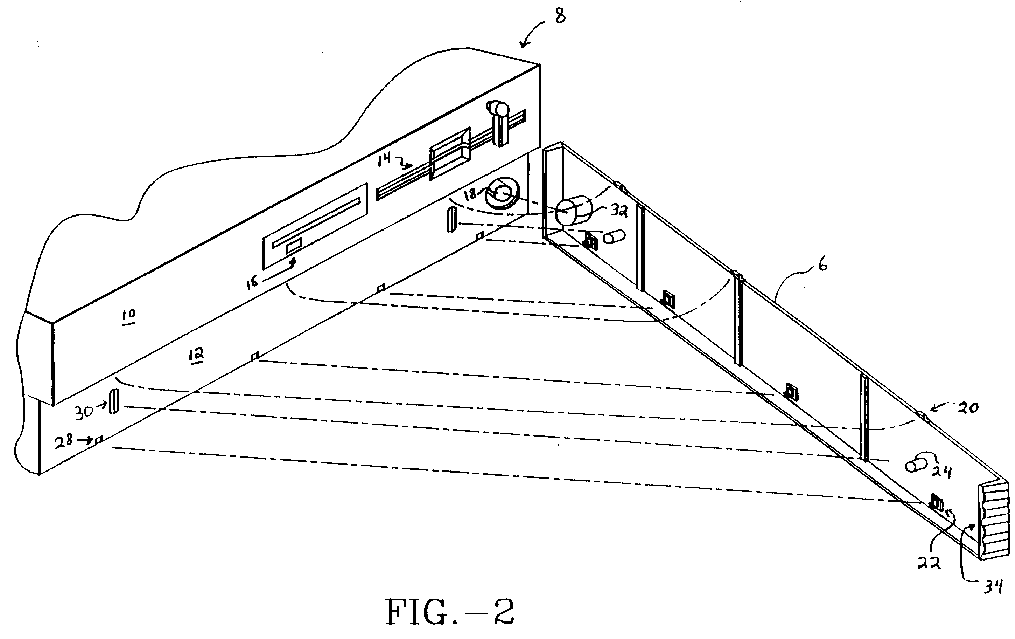

The design and assembly of the front of the housing and the front skirt in the first embodiment will now be described. Referring to Figure 2, the front face of the housing 8 is divided into top and bottom sections 10 and 12. The top section 10 in the first embodiment overhangs the bottom section 12 as shown in Figure 2. Disk drive ports 14 and LEDs 16 are located in the top section, while the front skirt 6 and power button are located in the bottom section. In accordance with an aspect of the invention, the arrangement of these components can be changed, although it is readily understood that cutaways or doors would have to be added if interface components, such as disk drive ports and LEDs, are located in the section covered by the skirt.

In a first embodiment, the bottom section 12 is specially designed to receive the front skirt as shown in Figure 2. It should be noted that even when the front skirt is removed, the front wall of the housing prevents the internal components of the computer from being unnecessarily exposed. Interengagement means are provided for detachably coupling the front skirt to the housing. In one embodiment, the front skirt is detachably coupled to the housing using two types of connectors --cantilever beam snap fits 20 and slide-in hooks 22. The snap fits 20 extend back from the top of the front skirt and in an upward direction. The snap fits hold the top of the front skirt in place. The hooks 22 extend back and upward from the body of the front skirt, and prevent the body of the skirt from pulling away from the housing. Studs 24 extending back from the body of the front skirt may also be used to add stability and prevent the front skirt from moving horizontally.

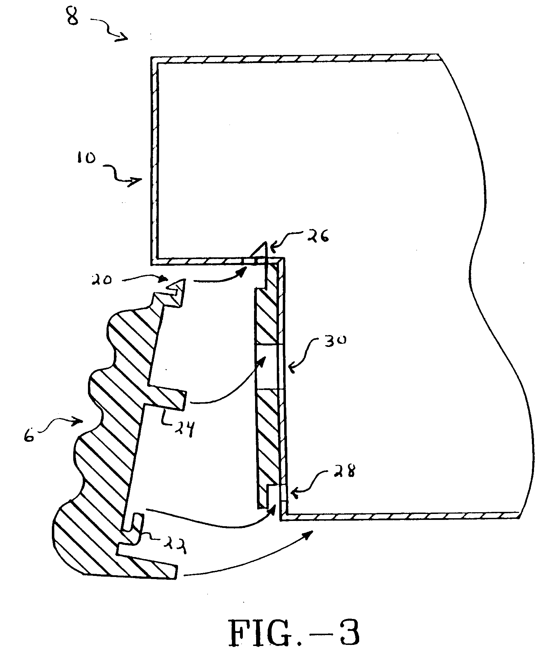

Figure 3 is a cross section of a housing and front skirt according to the first embodiment, showing how the snap fits and hooks attach to the housing. At the intersection of the top overhang section 10 and the bottom base section 12 a cavity 26 is disposed for receiving the head of a snap fit 20. The cavity is formed in the plastic skin of the housing and does not extend into the underlying metal structure. The opening to the cavity is slightly smaller than the head of the snap fit and acts to retain the snap fit in place after it is inserted into the cavity. The size of the opening is selected such that moderate pressure applied manually will cause the head of the snap fit to snap into place in the cavity. Similarly, a moderate downward pressure may be applied manually to disengage the snap fit from the cavity.

Referring to Figure 3, a hook 22 is also used to couple the front skirt 6 to the housing 8. The hook 22 extends from the back of the front skirt 6. The front of the housing has small holes 28 shaped and aligned to receive the hooks. The holes preferably extend through both the outer plastic skin and underlying metal structure of the housing. A back plate set back from the opening of the hole may be used to prevent contaminants from entering the housing, although a space must be provided above the hole to allow the hook to slide into place. When the hooks 22 are aligned with the corresponding holes 28 in the housing, the skirt can be pushed flush against the front of the housing and the hooks will enter the holes. Then moderate upward pressure can be used to engage the snap fits 20 and to slide the hooks 22 upward behind the housing wall such that they prevent the body of the skirt from pulling away from the housing. Similarly, the optional studs 24 can be pushed into elongated holes 30 in the housing as shown in Figure 2 and 3 to provide added stability. The hooks and studs slide into place and do not greatly increase the pressure needed to place and remove the front skirt. This arrangement provides a very stable coupling of the front skirt to the housing while requiring only moderate pressure to engage and disengage the snap fits for placement and removal of the skirt.

The front skirt may also be adapted to provide a removable cover for a power button or other interface component. Referring to Figure 2, the front skirt of the first embodiment includes a power button cover 32 that is removed and replaced with the skirt. The cover has legs with snap fits that fit through holes in the front skirt. The legs can slide up and down through the holes thereby moving the power button cover, but the snap fits prevent the legs from sliding out of the holes and detaching from the front skirt. When the front skirt is placed, the power button cover 32 fits over the underlying mechanical or electrical power switch 34. Pushing the cover engages and disengages the underlying power switch. Springs are used to provide the requisite tension for the power button cover. By building the power button cover into the front skirt, the appearance of the power button can be customized along with the front skirt. Similarly, covers for other buttons or components can be built into the front skirt, and cutaway regions or doors can be used for LEDs, displays, or ports.

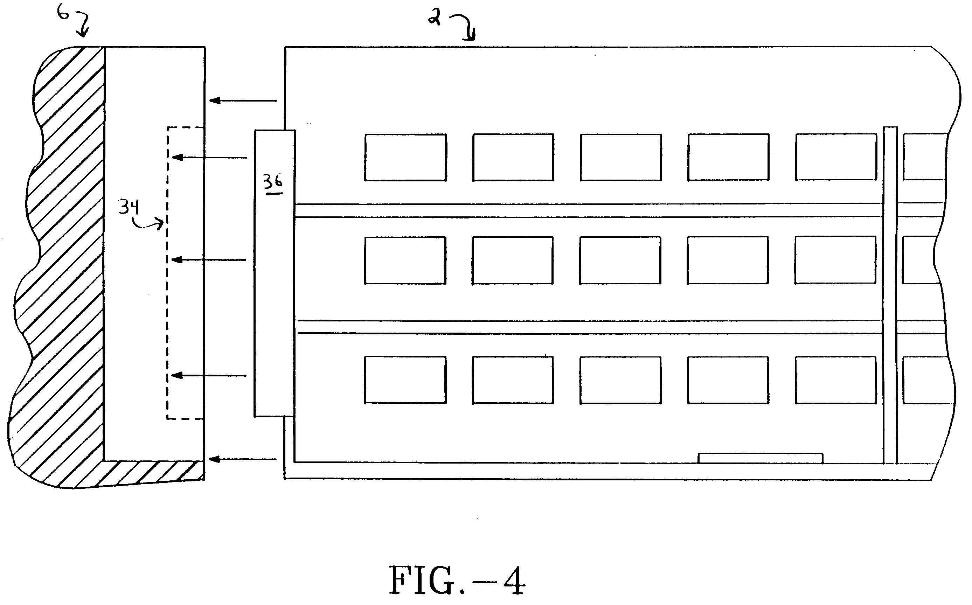

The side and bottom edges of the front skirt wrap around the housing to some extent in the first embodiment as shown in Figures 2 and 3. This provides added stability by preventing the skirt from sliding horizontally, as well as creating a molded appearance. The bottom section 12 of the front housing 8 is stepped in on the sides and bottom, so that the front skirt matches the contour of the assembled housing once mounted. In addition, the portions of the front skirt that wrap around the sides of the housing form slots 34 for receiving slide-in tabs 36 on the side skirts as shown in Figure 4. The inserted tabs help prevent the side skirts from pulling away from the housing body.

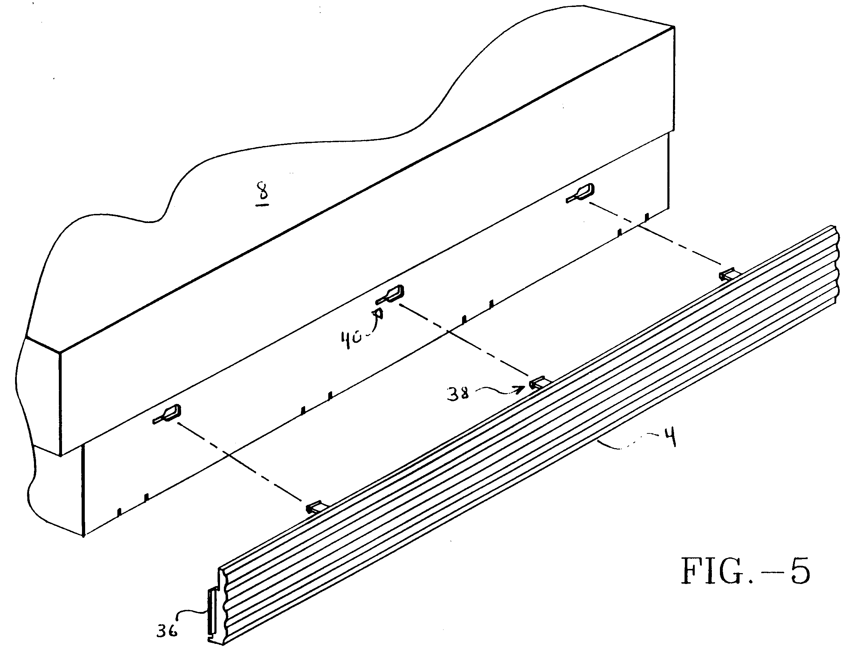

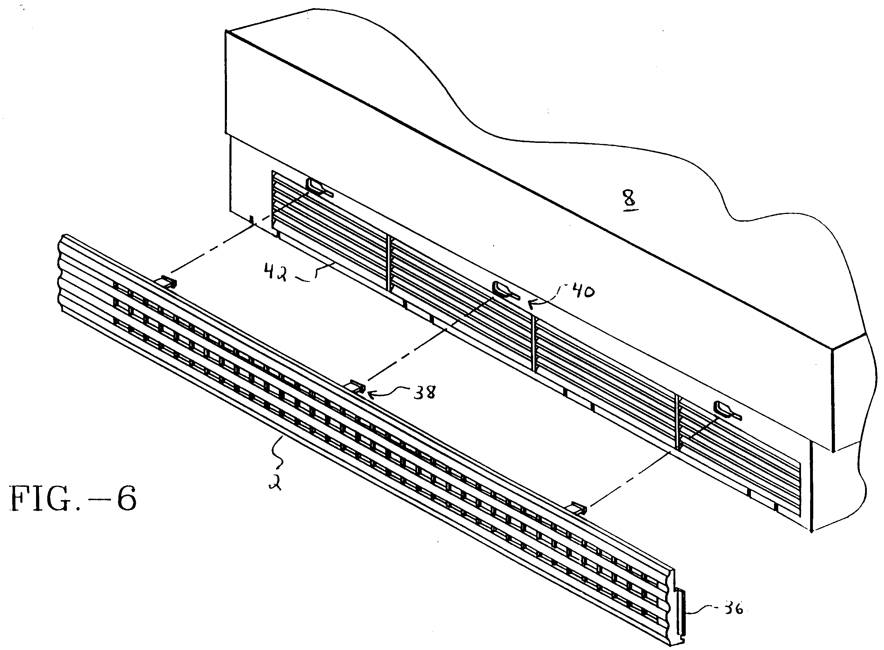

The side skirts of the first embodiment, shown in Figures 5 and 6, use slide-in clips 38 for attachment to the housing. The side skirts have clips 38 with wide heads and narrow necks that extend from the top back side of the skirts. The sides of the housing are provided with stepped in regions designed to received the skirts so that the mounted skirts match the contour of the assembled housing. Slide holes 40 are formed in the stepped region of the housing to receive the clips. In a first embodiment, the holes extend through both the plastic skin and underlying metal structure of the housing. Alternatively, a back plate or enclosed cavity may be used to prevent contaminants from entering the housing. The slide holes have a wide body and a narrow neck. The head of the clips fit through the wide body, but will not pass through the narrow neck. The side skirts may be attached by aligning the clips 38 with the wide body of the slide holes 40 and pushing the skirt flush against the housing which causes the clip heads to enter the slide holes. Moderate pressure can then be manually applied to slide the side skirt toward the front panel, which causes the neck of the clips to slide into the neck of the slide holes and thereby causes the slide holes to capture the head of the clips. This also causes the tab 36 of the side skirt to slide into the slot 34 of the front skirt.

In the first embodiment, a bump or dimple may be used on the back side of the side skirt or on the housing to prevent the skirt from unintentionally sliding or slipping. A recess may also be provided that aligns with the bump or dimple, so that the side skirt snaps into place. In any event, the friction and fit between the side skirt and housing is preferably adjusted such that the skirt will remain firmly in place while still allowing moderate manual pressure to be used for placement and removal of the skirt.

As with the front skirt, the side skirts may be adapted for use with components used for interfacing with the internal components of the computer. As described previously, a power button cover, disk drive port cutaway, or similar device could be incorporated into the side skirts. For instance, in the first embodiment the left side skirt is specially adapted for placement over a cooling vent 42 as shown in Figure 6. The left side skirt forms a plurality of holes that align with the cooling vent when the skirt is mounted. The appearance of the vent can be customized through the simple removal and replacement of the left side skirt with a new skirt of a different color or having a different design.

Thus, a first embodiment of the present invention provides for easy and inexpensive customization of a computer housing, while providing a stable assembled configuration. A sufficient amount of the housing is covered by the skirts to allow for distinct changes in appearance without necessitating the cost of paneling the entire housing surface. In addition, the integral connectors, including cantilever beam snap fits, hooks, tabs, and slide-in clips, provide for a simple means for assembly that does not require special tools and does not have loose pieces that may be misplaced.

Nevertheless, a variety of modifications may be made without departing from the scope and spirit of the present invention. To begin with, aspects of the present invention may be applied to a variety of computer housings, including tower configurations and housings that include integral monitors. Curved skirts or panels may also be used for irregular shaped housings. In addition, the use of skirts or panels need not be confined to the base of the housing -- the entire surface or selected regions of the housing may be adapted for placement of compatible skirts or panels. Preferably, however, a sufficient area of the housing is covered, so that the appearance of the housing can be dramatically altered by changing skirts or panels. While the skirts preferably comprise a lightweight and inexpensive plastic material, any variety of materials can be used, including metals, woods, composite materials, or the like.

A variety of interengagement means and configurations may also be used. For instance a flat front skirt could be used that slides horizontally into place using slide-in clips, and the side skirts could use snap fits and hooks. Alternatively, the skirts could be coupled to the housing using button snaps, ordinary snap fits, clips, or any variety of known connectors. Rails could also be used to slide the skirts or panels into place, and bumps or dimples on the back of the skirts or panels could be used to hold them in place. Alternatively, the rails could be tightened using a screw or clamp device to hold the skirt or panel in place. Screws or clamps also may be provided integral to the skirt or panel in a fashion similar to that disclosed for the power button cover, and could be tightened manually to hold the skirt or panel in place. Velcro or similar adhering means might also be used.

The foregoing description is presented to enable any person skilled in the art to make and use the invention. Descriptions of specific designs are provided only as examples. Various modifications to the preferred embodiment will be readily apparent to those skilled in the art, and the generic principles defined herein may be applied to other embodiments and applications without departing from the spirit and scope of the invention. Thus, the present invention is not intended to be limited to the embodiments shown, but is to be accorded the widest scope consistent with the principles and features disclosed herein.

While a variety of embodiments have been disclosed, it will be readily apparent to those skilled in the art that numerous other modifications and variations not mentioned above can still be made without departing from the spirit and scope of the following claims.

## Claims

1. A computer housing containing internal components, such as a CPU, power supply, storage device, or the like, said computer housing comprising:
at least a first wall shielding said internal components from a surrounding environment;
a first skirt having an appearance distinct from said first wall;
said first skirt being detachably coupled to said first wall and said first skirt extending across said first wall in at least one direction.

2. The computer housing of claim 1, wherein said first wall houses at least one interface component, such as a button, display, port, I/O connector, or the like, and said first skirt includes means for accessing said interface component.

3. The computer housing of claim 2, wherein said interface component is a power switch and said means for accessing said power switch is a power switch cover coupled to said first skirt.

4. The computer housing of claim 2, wherein said interface component is a vent, and said first skirt forms a plurality of holes as the means for accessing said vent.

5. The computer housing of claim 1, wherein said first wall includes a recessed region adapted to receive said first skirt, and said first skirt is detachably coupled to said recessed region of said first wall.

6. The computer housing of claim 1, further comprising interengagement means integral with said first skirt and said first wall for detachably coupling said first skirt to said first wall.

7. The computer housing of claim 6, wherein said interengagement means includes snap fits.

8. The computer housing of claim 6, wherein said interengagement means are configured such that said first skirt may be selectively engaged and disengaged from said housing by applying moderate manual pressure to said first skirt.

9. The computer housing of claim 1, further comprising:
at least a second wall shielding said internal components from a surrounding environment;
a second skirt having an appearance distinct from said second wall;
said second skirt being detachably coupled to said second wall;
wherein said first skirt spans the width of said first wall and said second skirt spans the width of said second wall such that said first skirt and said second skirt form a substantially continuous border spanning the width of said first and second walls.

10. The computer housing of claim 91 wherein said first skirt is detachably coupled to said first wall by snap fits such that said first skirt may be selectively engaged to said first wall by snapping said first skirt to said first wall; and
wherein said second skirt is detachably coupled to said second wall by slide connectors such that said second skirt may be selectively engaged to said second wall by sliding said second skirt along said second wall and into place adjacent to said first skirt.

11. A computer housing containing internal components, such as a CPU, power supply, storage device, or the like, said computer housing comprising:
at least one housing wall shielding said internal components from a surrounding environment;
a skirt with integral connectors, said skirt sized to cover a substantial portion of said housing wall;
said housing wall being adapted for receiving the connectors of said skirt such that said skirt is detachably coupled to said housing wall;
said connectors and said wall being configured such that said connectors may be selectively engaged and disengaged by the application of moderate manual pressure to said skirt.

12. A computer housing containing internal components, including a CPU, power supply, storage device, or the like, said computer housing comprising:
at least one housing wall shielding said internal components from a surrounding environment;
a skirt sized to cover a substantial portion of said housing wall;
said skirt provided with a connector having a head and a neck, the head of the connector being wider than the neck of the connector;
the housing wall forming a cavity sized to receive said head and forming an opening to said cavity having a narrow portion slightly larger than said neck and slightly narrower than said head;
said cavity receiving said head and said narrow portion of said opening substantially surrounding said neck, thereby capturing said head and providing detachable coupling of said skirt to said wall.

13. The computer housing of claim 12, wherein said connector is a snap fit sized such that said snap fit may be engaged and disengaged from said cavity by applying manual pressure to said skirt.

14. The computer housing of claim 2, wherein said opening further comprises a widened portion adjacent to said narrow portion, said widened portion being larger than said head such that said connector may be slidably engaged and disengaged from said cavity by applying manual pressure to said skirt.

15. An apparatus for customizing the appearance of a computer housing or the like comprising:
one or more panel members having a first side visible to a user and a back side adapted for selective interengagement with at least a portion of said computer housing, wherein each panel member is characterized by a first side exhibiting a predetermined color, design, appearance, or the like;
interengagement means provided in the back side of said panel for interengaging said panel member with a desired portion of said computer housing such that the appearance of said computer housing is selectively customized by interengaging one or more of said panel members with said computer housing.

16. An apparatus for customizing the appearance of a computer housing or the like comprising:
a housing defining a plurality of surfaces for encasing a computer or the like, wherein each surface of said housing is provided with a means for engaging with one or more substantially adjacent mating panels;
each panel characterized by a different color, design, appearance, or the like wherein each panel is provided with interengagement means for selective removable interengagement with a corresponding surface of said housing such that said panel substantially covers said corresponding surface and changes the appearance of said housing.

17. The apparatus of claim 16 wherein said means for engaging comprises a slidable mating engagement between said panel and a corresponding surface.

18. The apparatus of claim 16 wherein said means for engaging comprises a snap-on or interference fit engagement between said panel and a corresponding surface.
